Europäisches Patentamt

European Patent Office

Office européen des brevets

(11) Veröffentlichungsnummer: **0 143 214 B1**

(12) **EUROPÄISCHE PATENTSCHRIFT**

(45) Veröffentlichungstag der Patentschrift: **13.11.91**

(51) Int. Cl.⁵: **H04L 25/03**

(21) Anmeldenummer: 84110466.4

(22) Anmeldetag: 03.09.84

(54) Adaptiver Entzerrer.

(30) Priorität: 05.09.83 DE 3331932

(43) Veröffentlichungstag der Anmeldung:
05.06.85 Patentblatt 85/23

(45) Bekanntmachung des Hinweises auf die
Patenterteilung:
13.11.91 Patentblatt 91/46

(84) Benannte Vertragsstaaten:
AT BE CH DE FR GB IT LI NL SE

(56) Entgegenhaltungen:
US-A- 3 368 168
US-A- 3 781 720

PATENT ABSTRACTS OF JAPAN, Band 7, Nr.
65 (E-165)[1210], 18. März 1983; & JP-A-57 211
817 (FUJITSU K.K.) 25-12-1982

PATENT ABSTRACTS OF JAPAN, Band 1, Nr.
51, 12. April 1978, Seite 936 E 78; & JP-A-53
14 537 (NIPPON DENKI K.K.) 09-02-1978

R.W. LUCKY et al.: "Principles of Data
Communications", 1968, Seiten 128-165,
McGraw Hill, New York, US; Kapitel 6,
"Equalization of the baseband system"

(73) Patentinhaber: SIEMENS AKTIENGESELL-
SCHAFT
Wittelsbacherplatz 2
W-8000 München 2(DE)

(72) Erfinder: Schenk, Heinrich, Dr.-Ing.
Becker-Gundahl-Strasse 1
W-8000 München 71(DE)

## Beschreibung

Die Erfindung betrifft einen adaptiven Entzerrer zum Entzerren von in einem oder mehreren Übertragungskanälen in Form von amplitudenmodulierten Signalen übertragenen Nachrichtensignalen, mit mindestens einer Kette von Verzögerungsgliedern, an deren Ausgängen die der jeweiligen Kette zugeführten amplitudenmodulierten Signale jeweils um eine vorgegebene Zeitspanne versetzt auftreten, mit den Eingängen bzw. Ausgängen der Verzögerungsglieder verbundenen Bewertungsgliedern, die ihre Ausgangssignale an eine Summierschaltung abgeben, und mit einer mit dieser Summierschaltung verbundenen Entscheidereinrichtung, welche den Bewertungsgliedern jeweils einen Bewertungskoeffizienten zuführen, wobei zumindest ein Teil der Bewertungskoeffizienten durch diesen individuell zugeordnete Begrenzeranordnungen in seinem Wertebereich begrenzt ist.

Aus "PATENT ABSTRACTS OF JAPAN", Band 7, Nr. 65 (E-165) (1210), 18.3.1983, JP-A- 57 211 817 ist es bereits bekannt, bei einem zuvor genannten adaptiven Entzerrer einem Teil der Bewertungsgliedern Steuersignale über einheitlich ausgelegte Begrenzeranordnungen zuzuführen. Durch eine solche einheitliche Auslegung dieser Begrenzeranordnung ist für die einzelnen Steuersignale ein einziger Wertebereich fest vorgegeben. Durch diese Maßnahme können Konvergenzprobleme bzw. Instabilitätsprobleme auftreten, denn bei Festlegung eines zu kleinen Wertebereiches für die einzelnen Steuersignale ist eine optimale Abstimmung des adaptiven Entzerrers nicht möglich. Ein zu großer Wertebereich kann dagegen zu einer Instabilität dieses Entzerrers führen. Zur Lösung dieser Probleme könnte hier als Kompromiß ein für alle Steuersignale einheitlicher mittlerer Wertebereich festgelegt werden, wobei jedoch in diesem Falle weder für die Abstimmgenauigkeit noch für die Stabilität des Entzerrers optimale Ergebnisse zu erwarten wären. Da darüber hinaus bei Auftreten einer größeren Verzerrung bzw. eines größeren Fehlers lediglich Steuersignale an diejenigen Bewertungsglieder abgegeben werden, welche mit einer Begrenzeranordnung verbunden sind, können bei einem solchen, hinsichtlich der Anzahl der Bewertungsglieder reduzierten System für allgemeine Anwendungsfälle Konvergenzprobleme auftreten. Denn bei einem solchen System mit einer reduzierten Anzahl von Bewertungsgliedern kann der auftretende Fehler eine solche Größenanordnung annehmen, daß eine Konvergenz in Frage gestellt sein kann.

Aus "PATENT ABSTRACTS OF JAPAN", Band 1, Nr. 51, 12.4.1978, Seite 936 E 78, JP-A-5314537 ist ein weiterer adaptiver Entzerrer bekannt. Zur Lösung der gerade erwähnten Probleme gibt auch dieser Stand der Technik keine Hinweise. Denn durch diesen ist es lediglich bekannt, ein einem Entzerrer an einem Steuereingang zugeführtes Steuersignal in seinem Wertebereich zu begrenzen.

Weitere adaptive Entzerrer sind aus US-A-3 781 720 und US-A-3 368 168 bekannt. Bei diesen adaptiven Entzerrern erfolgt die Einstellung von Bewertungskoeffizienten ebenfalls nach Maßgabe von mittels einer Entscheidereinrichtung gewonnenen Fehlersignalen, ohne jedoch Maßnahmen zur Begrenzung der Bewertungskoeffizienten vorzusehen. Damit können auch bei diesen adaptiven Entzerrern Konvergenzprobleme bzw. Instabilitätsprobleme auftreten.

Außerdem ist bereits aus "Datenübertragung", P. Bocker, Springer-Verlag, 1976, Band 1, Seite 225, Bild 5.22 ein Transversalfilter-Entzerrer mit einer Entscheidereinrichtung bekannt, welche ein Fehlersignal abgibt, aus dem in Verbindung mit einem einer vorgegebenen Entzerrereinstellgröße entsprechenden Steuersignal die Bewertungskoeffizienten ermittelt werden. Eine befriedigende Entzerrung der einer Empfangseinrichtung über einen Übertragungskanal zugeführten Signale ist bei Verwendung dieses bekannten Entzerrertyps im allgemeinen erst dann möglich, wenn das für die Ableitung der Bewertungskoeffizienten herangezogene Fehlersignal, das die Abweichung des der Entscheidereinrichtung zugeführten Signals von einem am Ausgang der Entscheidereinrichtung anstehenden Sollwert angibt, nahezu seinen Minimalwert angenommen hat. Der Minimalwert wird erreicht, wenn die Bewertungskoeffizienten zu bestimmten, von dem Übertragungskanal abhängigen Endwerten hin konvergiert sind. Dieser Zustand, bei dem der adaptive Entzerrer auf den Übertragungskanal eingestellt ist, ist im allgemeinen während der Signalübertragungsphase gegeben. Es kann jedoch auch der Fall eintreten, daß zu Beginn der Signalübertragungsphase der adaptive Entzerrer sich mit seinen Bewertungskoeffizienten noch nicht auf den Übertragungskanal eingestellt hat. Hierbei kann die Anzahl der in der Entscheidereinrichtung durchgeführten fehlerhaften Entscheidungen sehr hoch sein. Mit dem aus diesen Fehlentscheidungen resultierenden Fehlersignal konvergieren im allgemeinen die Bewertungskoeffizienten nicht. Aus diesem Grund wird, wie beispielsweise aus der DE-OS 22 52 849 hervorgeht, in einer vor der eigentlichen Signalübertragungsphase liegenden Abgleichphase ein im Empfänger bekanntes Testsignal über den Übertragungskanl übertragen. Mit Hilfe dieses Testsignals wird dann der adaptive Entzerrer mit seinen Bewertungskoeffizienten auf den Übertragungskanal eingestellt.

Es ist nun Aufgabe der vorliegenden Erfindung, einen Weg zu zeigen, wie die beim Stand der Technik möglichen Konvergenz- und Instabilitätsprobleme bei dem eingangs genannten adaptiven
Entzerrer vermieden werden können.

Gelöst wird die vorstehend aufgezeigte Aufgabe bei einem adaptiven Entzerrer gemäß der vorliegenden Erfindung dadurch, daß die zu festgelegten Zeitpunkten auftretenden Bewertungskoeffizienten jeweils von der Entscheidereinrichtung her
nach Maßgabe eines dem gewonnenen Entscheidungsergebnis entsprechenden Fehlersignals in
Verbindung mit einer für die Ermittlung der Bewertungskoeffizienten einheitlich festgelegten Entzerrereinstellgröße adaptiv eingestellt sind, daß jeder
der zu einem Bewertungszeitpunkt auftretenden
Bewertungskoeffizienten dem zugeordneten Bewertungsglied über eine gesonderte, eine für den jeweiligen Bewertungskoeffizienten individuell festgelegte Begrenzung des Wertebereiches bewirkende
Begrenzeranordnung zugeführt ist und daß die
durch die jeweilige Begrenzeranordnung hervorgerufene Begrenzung des Wertebereiches nach Maßgabe eines durch Mittelung der von der Entscheidereinrichtung nacheinander erzeugten Fehlersignale gewonnenen gemittelten Fehlersignals änderbar ist.

Die Erfindung bringt den Vorteil mit sich, daß
mit einem relativ geringen zusätzlichen schaltungstechnischen Aufwand bei dem adaptiven Entzerrer
einerseits die oben erwähnten Konvergenz- und
Instabilitätsprobleme vermieden werden und andererseits das Einlaufverhalten verbessert ist. Denn
zur Erhöhung der Einlaufgeschwindigkeit des adaptiven Entzerrers kann zunächst der Wertebereich
der einzelnen Bewertungskoeffizienten individuell
stark begrenzt werden. Zur Gewährleistung einer
hohen Abstimmgenauigkeit des adaptiven Entzerrers können dann die einzelnen Begrenzeranordnungen bei Vorliegen eines bestimmten gemittelten
Fehlersignals so gesteuert werden, daß der bisher
stark begrenzte Wertebereich der einzelnen Bewertungskoeffizienten individuell erweitert wird.

Zweckmäßigerweise werden die Begrenzeranordnungen so ausgelegt, daß durch die jeweilige
Begrenzeranordnung ein erster sowie ein gegenüber diesem stärker begrenzter zweiter Wertebereich festgelegt ist und daß bei Unterschreiten eines festgelegten Schwellwertes durch das gemittelte Fehlersignal der erste Wertebereich, andererseits dagegen der zweite Wertebereich für jeden
der Bewertungskoeffizienten ausgewählt ist. Dies
bringt den Vorteil einer einfachen Realisierung der
einzelnen Begrenzeranordnungen mit sich.

Weiterhin ist es zweckmäßig, daß nach Maßgabe des von der Entscheidereinrichtung gewonnen
gemittelten Fehlersignals auch die Entzerrerreinstellgröße änderbar ist. Auch hier kann zunächst
die Entzerrereinstellgröße so groß gewählt werden,
daß eine möglichst kurze Einlaufzeit erreicht wird.

Abhängig von der Größe des Fehlersignals wird
dann der Wert der Entzerrereinstellgröße so reduziert, daß die Bewertungskoeffizienten optimal eingestellt werden können. Auch hier ist es zweckmäßig, daß die Entzerrereinstellgröße in Stufen änderbar ist .

Im folgenden wird die Erfindung anhand von
Zeichnungen beispielsweise näher beschrieben.

FIG 1 zeigt in einem Blockschaltbild einen Signalempfänger mit einem adaptiven Entzerrer,
bei dem die Erfindung angewandt ist,

Fig. 2 zeigt ein Transversalfilter und eine mit
diesem verbundene Schaltungsanordnung für
die Koeffizientenermittlung, die in Fig. 1 lediglich
schematisch dargestellt sind,

Fig. 3 zeigt ausschnittweise eine in der Schaltungsanordnung für die Koeffizientenermittlung
vorhandene Begrenzeranordnung, durch die die
Begrenzung der Wertebereiche der Bewertungskoeffizienten in Stufen änderbar ist.

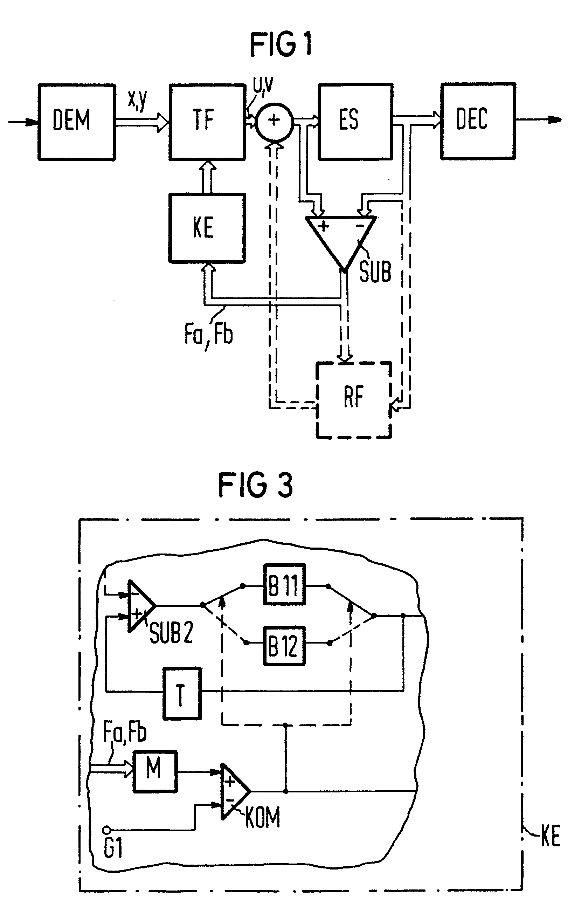

Fig. 1 zeigt den Empfänger eines
Quadraturamplitudenmodulations-
Signalübertragungssystems. Ein derartiges Übertragungssystem wird auch als QAM-Signalübertragungssystem bezeichnet. Der Empfänger dieses
QAM-Systems weist einen Demodulator DEM auf,
der die in den empfangenen quadraturamplitudenmodulierten Signalen enthaltenen orthogonalen Signalanteile trennt. Diese Signalanteile werden anschließend abgetastet und über gesonderte Leitungen (Übertragungskanäle) X, Y zu einem Transversalfilter TF hin übertragen. Als Abtastfrequenz wird
hierbei eine Frequenz gewählt, die der Schrittgeschwindigkeit der in Form von quadraturamplitudenmodulierten Signalen übertragenen Nachrichtensignale entspricht. Unter Nachrichtensignalen
sollen hierbei beliebige Digitalsignale, wie z.B. Datensignale, Sprachsignale in codierter Form
und/oder Textinformationssignale, verstanden werden.

Das dem Demodulator DEM nachgeschaltete
Transversalfilter TF dient bei dem hier vorliegenden Ausführungsbeispiel lediglich zur Kompensation von Vorschwingern. Es enthält für jeden der
beiden Übertragungskanäle X, Y ein gesondertes,
von seinem Aufbau her bekanntes Transversalfilter.
Zur Kompensation der Vorschwinger werden dem
Transversalfilter TF Bewertungskcoeffizienten von
einer Schaltungsanordnung für die Koeffizientenermittlung KE her zugeführt. Die durch diese Bewertungskoeffizienten in dem Transversalfilter korrigierten, von dem Demodulator DEM abgegebenen
Abtastwerte werden anschließend an einen Addierer abgegeben.Diese korrigierten Abtastwerte sind
in Fig. 1 mit U und V bezeichnet. Die Abtastwerte
U sollen dabei beispielsweise dem Übertragungskanal X zugeordnet sind. In entsprechender Weise
sind dann die Abtastwerte V dem anderen Übertragungskanal Y zugeordnet. Dem gerade genannten Addierer werden außerdem noch korrigierte Abtastwerte von einem lediglich der Kompensation von Nachschwingern dienenden Rekursivfilter RF her zugeführt. Auch mit diesem Rekursivfilter ist eine in Fig. 1 nicht näher dargestellte Schaltungsanordnung für die Koeffizientenermittlung verbunden. Das Rekursivfilter ist hier lediglich gestrichelt gezeichnet. Damit soll angedeutet werden, daß dieses Filter und die damit verbundenen Leitungen entfallen können, wenn für das Transversalfilter TF ein Filter verwendet wird, mit dem sowohl Vor- als auch Nachschwinger kompensiert werden können. In diesem Fall würde auch der genannte Addierer entfallen.

Der Ausgang des Addierers ist mit einer Entscheidungsstufe ES verbunden. Diese Entscheidungsstufe besteht entsprechend der zu bewertenden, den beiden Übertragungskanälen zugeordneten Abtastwerten aus zwei Teilschaltungen. Jede dieser Teilschaltungen gibt an ihrem Ausgang bei ihr eingangsseitig zugeführten Abtastwerten, die unterhalb einer vorgegebenen Schwelle liegen, einen ersten Pegel und bei Abtastwerten, die oberhalb dieser Schwelle liegen, einen zweiten Pegel ab. Die auf diese Weise entstehenden Ausgangssignale werden anschließend einem Decodierer DEC zugeführt, der aus den den beiden Übertragungskanälen zugehörigen Signalen die ursprünglichen Nachrichtensignale erzeugt.

Die den beiden Teilschaltungen der Entscheidungsstufe ES zugehörigen Eingänge und Ausgänge sind außerdem mit einem Subtrahierer SUB verbunden, der wiederum entsprechend der zu berücksichtigenden Übertragungskanäle aus zwei Teilschaltungen besteht. An den Ausgängen dieser Teilschaltungen wird jeweils ein Fehlersignal abgegeben, welches die Abweichung eines der Entscheidungsstufe zugeführten Abtastwertes von dem zugehörigen Ausgangssignal der Entscheidungsstufe angibt. Die Fehlersignale sind in Fig. 1 mit Fa und Fb bezeichnet. Das Fehlersignal Fa bezieht sich dabei auf den Übertragungskanal X. In entsprechender Weise bezieht sich das Fehlersignal Fb auf den Übertragungskanal Y. Diese Fehlersignale werden dann den bereits erwähnten Schaltungsanordnungen für die Koeffizientenermittlung zugeführt, die daraus die für die Kompensation der Vor- bzw. Nachschwinger erforderlichen Bewertungskoeffizienten ableiten.

Die Ausgänge der beiden Teilschaltungen der Entscheidungsstufe ES sind außerdem mit dem bereits genannten Rekursivfilter RF verbunden. Damit werden diesem Rekursivfilter von Vorschwingern freie Signale zugeführt.

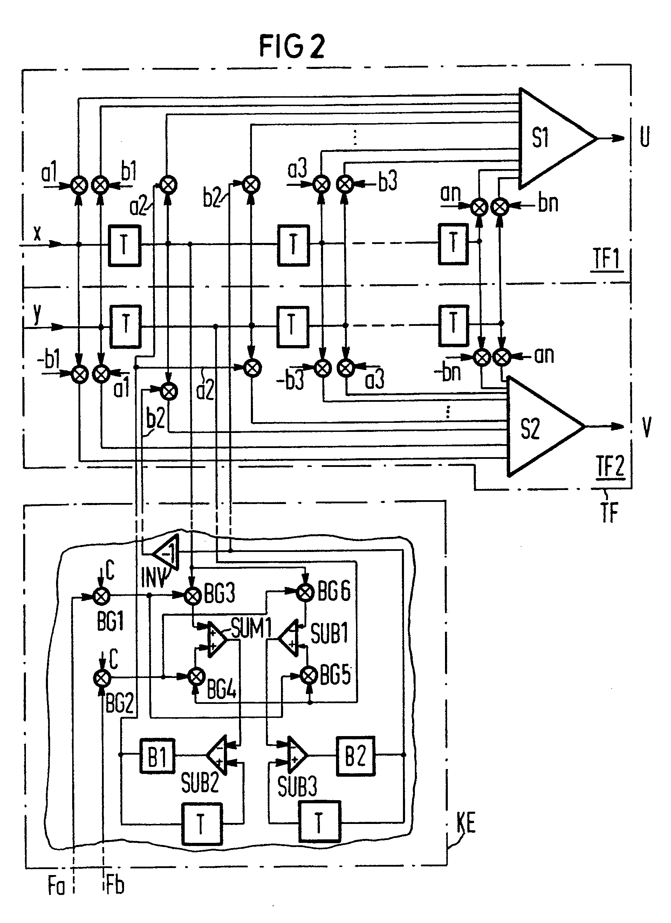

Für die Erläuterung der Erfindung sind in Fig. 2 das Transversalfilter TF und die Schaltungsanordnung für die Koeffizientenermittlung KE detaillierter dargestellt. Das Transversalfilter TF besteht aus zwei gleich aufgebauten Teilfiltern TF1 und TF2. Das Teilfilter TF1 dient dabei zur Entzerrung der Vorschwinger der in dem Übertragungskanal X übertragenen Signale. Mit dem Teilfilter TF2 werden die Signale des Übertragungskanals Y in entsprechender Weise entzerrt. Jedes dieser Teilfilter weist eine Kette von Verzögerungsgliedern T auf, an deren Ausgängen die der Kette von dem Demodulator DEM her zugeführten Signale jeweils um eine vorgegebene Zeitspanne versetzt auftreten. Mit dem Eingang jeder Kette bzw. mit den Ausgängen der Verzögerungsglieder sind Bewertungsglieder verbunden, die die an dem zugehörigen Eingang bzw. Ausgang auftretenden Signale jeweils mit einem Bewertungskoeffizienten multiplizieren und die daraus resultierenden Signale an eine Summierschaltung abgeben. Die dem Teilfilter TF1 zugehörige Summierschaltung ist in Fig. 2 mit S1 bezeichnet. Die Summierschaltung des Teilfilters TF2 trägt die Bezeichnung S2. Die bei den einzelnen Bewertungsgliedern einer Kette zu berücksichtigenden Bewertungskoeffizienten sind fortlaufend durchnumeriert. Sie sind in Fig. 2, beginnend mit dem Bewertungsglied am Eingang jeder Kette mit a1 bis an bezeichnet. In den beiden Teilfiltern gleich bezeichnete Bewertungskoeffizienten sind auch von ihren Zahlenwerten her gleich. Mit diesen Bewertungskoeffizienten werden lediglich die durch die beiden zueinander orthogonalen Übertragungskanäle selbst hervorgerufenen Verzerrungen der in diesen Übertragungskanälen übertragenen Signale kompensiert.

Die in den beiden Übertragungskanälen übertragenen Signale werden aber zusätzlich durch Übersprechen zwischen den beiden Übertragungskanälen verzerrt. Für die Kompensation dieser Verzerrungen sind mit den beiden Summierschaltungen S1 und S2 weitere Bewertungsglieder verbunden. Diese zusätzlichen Bewertungsglieder eines der Teilfilter sind an den Eingang der Kette bzw. an die Ausgänge der Verzögerungsglieder des jeweils anderen Teilfilters angeschlossen. Diese Bewertungsglieder multiplizieren wieder die an dem zugehörigen Eingang bzw. Ausgang auftretenden Signale jeweils mit einem Bewertungskoeffizienten. Die Bewertungskoeffizienten sind dabei in den beiden Teilfiltern zahlenmäßig gleich. Sie weisen lediglich ein entgegengesetztes Vorzeichen auf. So sind in Fig. 1 diese Bewertungskoeffizienten für das Teilfilter TF1 mit b1 bis bn und für das Teilfilter TF2 mit -b1 bis -bn bezeichnet.

Durch die Bewertungskoeffizienten a1, b1 bis an, bn werden, wie bereits oben erwähnt, lediglich als Vorschwinger sich auswirkende Verzerrungen in den beiden Teilfiltern kompensiert. Die Bewertungskoeffizienten sind dafür so gewählt, daß dasjenige Bewertungskoeffizientenpaar (a, b), welches die in den beiden Übertragungskanälen die eigentlichen Informationen darstellenden Abtastwerte bewertet, den Bewertungsgliedern am Ende der beiden Verzögerungsketten zugeführt wird. Gemäß Fig. 2 handelt es sich demzufolge um das Koeffizientenpaar an, bn. Die die eigentlichen Informationen darstellenden Abtastwerte werden im übrigen auch als Hauptwerte bezeichnet. Der Bewertungskoeffizient an des diese Hauptwerte bewertenden Bewertungskoeffizientenpaares (an, bn) nimmt nur positive Werte an. Die übrigen Bewertungskoeffizientenpaare können sowohl positive als auch negative Werte annehmen. Die durch die genannten Bewertungskoeffizientenpaare bewerteten Signale werden in den bereits genannten Summierschaltungen S1 und S2 aufsummiert und als entzerrte Abtastwerte U, V dem in Fig. 1 dargestellten Addierer zugeführt.

In Fig. 2 ist noch die Schaltungsanordnung für die Koeffizientenermittlung KE dargestellt. Für die automatische Einstellung des adaptiven Entzerrers auf die beiden Übertragungskanäle ermittelt diese Schaltungsanordnung die einzelnen Bewertungskoeffizienten iterativ. Bei dem hier betrachteten Ausführungsbeispiel erfolgt diese Ermittlung nach dem sogenannten Gradientenverfahren. Nach diesem Verfahren kann ein zum Zeitpunkt k + 1 zu berücksichtigendes Bewertungskoeffizientenpaar aus dem zum Zeitpunkt k ermittelten Bewertungskoeffizientenpaar nach folgenden Gleichungen bestimmt werden:

$$a_i(k+1) = a_i(k) - c\,[Fa \cdot X(k+1-i) + Fb \cdot Y(k+1-i)]$$
$$b_i(K+1) = b_i(k) - c\,[Fa \cdot Y(k+1-i) - Fb \cdot X(k+1-i)]$$

mit i = 1, 2,...n.
c gibt dabei eine als Entzerrereinstellgröße bezeichnete Konstante an. Mit Fa und Fb sind die zum Zeitpunkt k am Ausgang des in Fig. 1 dargestellten Subtrahierers SUB auftretenden Fehlersignale bezeichnet. X(k+1-i) bzw. Y(k+1-i) gibt schließlich den Abtastwert des Übertragungskanals X bzw. Y an, der mit den Bewertungskoeffizienten $a_i(k+1)$ und $b_i(k+1)$ zu bewerten ist.

In Fig. 2 ist die Schaltungsanordnung für die Koeffizientenermittlung KE lediglich ausschnittweise dargestellt. Hier ist nur der Schaltungsteil angegeben, der das Bewertungskoeffizientenpaar a2, b2 nach den oben angegebenen Gleichungen ermittelt. Die Schaltungsanordnung für die Koeffizientenermittlung enthält eine der Anzahl der Bewertungskoeffizientenpaare entsprechende Anzahl dieser Schaltungsteile. Dem hier dargestellten Schaltungsteil werden von dem in Fig. 1 dargestellten Subtrahierer SUB her die Fehlersignale Fa und Fb zugeführt. Jedes dieser Fehlersignale wird zunächst in einem gesonderten Bewertungsglied BG1, BG2 mit einem der Einstellgröße c entsprechenden Steuersignal multipliziert. Die daraus resultierenden Signale c•Fa, c•Fb werden anschließend in weitere Bewertungsglieder BG3, BG4 übernommen. Das Bewertungsglied BG3 multipliziert dabei das von dem Bewertungsglied BG1 abgegebene Signal c•Fa mit dem am Ausgang des ersten Verzögerungsgliedes T des Teilfilters TF1 auftretenden Abtastwert. Dieses Bewertungsglied ist hierzu mit dem genannten Ausgang verbunden. In analoger Weise multipliziert das Bewertungsglied BG4, das mit dem Ausgang des ersten Verzögerungsgliedes des Teilfilters TF2 verbunden ist, das Signal c•Fb mit dem von dem Ausgang des Verzögerungsgliedes abgegebenen Abtastwert. Die Ausgangssignale der Bewertungsglieder BG3 und BG4 werden anschließend einem Summierer SUM1 zugeführt, der ein Summensignal abgibt, welches dem Ausdruck c [Fa•X(k+1-i) + Fb•Y(k+1-i)] in der ersten der beiden Gleichungen entspricht.

Die beiden Bewertungsglieder BG1 und BG2 sind außerdem jeweils mit einem weiteren Bewertungsglied BG5, BG6 verbunden. Das Bewertungsglied BG5, das mit dem Ausgang des ersten Verzögerungsgliedes T des Teilfilters TF2 verbunden ist, multipliziert dessen Ausgangssignal mit dem von dem Bewertungsglied BG1 abgegebenen Signal. Das Bewertungsglied BG6 multipliziert schließlich das von dem Bewertungsglied BG2 abgegebene Signal mit dem von dem Ausgang des ersten Verzögerungsgliedes des Teilfilters TF1 her zugeführten Abtastwert. Das daraus resultierende Signal wird in einem nachgeschalteten Subtrahierer SUB1 von dem am Ausgang des Bewertungsgliedes BG5 auftretenden Signal subtrahiert. Das vom Ausgang dieses Subtrahierers abgegebene Differenzsignal entspricht dem Ausdruck c[Fa•Y(k+1-i)- Fb•X(k+1-i)] der zweiten der beiden Gleichungen.

Der Ausgang des bereits erwähnten Summierers SUM1 ist mit dem "-"-Eingang eines weiteren Subtrahierers SUB2 verbunden. An den zugehörigen "+"-Eingang dieses Subtrahierers ist der Ausgang eines Verzögerungsgliedes T angeschlossen. Dieses Verzögerungsglied verzögert ein ihm zugeführtes Signal um die gleiche Zeitspanne wie die Verzögerungsglieder des Transversalfilters TF. Eingangsseitig ist dieses Verzögerungsglied mit dem Ausgang einer Begrenzeranordnung B1 verbunden, die eingangsseitig das von dem Subtrahierer SUB2 abgegebene Signal zugeführt erhält.

Durch die gerade erwähnten Schaltungselemente wird das von dem Summierer SUM1 zum Zeitpunkt k + 1 abgegebene Summensignal von einem zum Zeitpunkt k am Ausgang des Subtrahierers SUB2 aufgetretenen und durch das Verzögerungsglied entsprechend verzögert wieder an dessen "+"-Eingang zurückgeführten Signals subtrahiert. Das sich daraus ergebende Signal gibt den zum Zeitpunkt k + 1 aktuellen Bewertungskoeffizienten an, hier also dem Bewertungskoeffizienten a2-(k + 1). Die Begrenzeranordnung B1 bewirkt hierbei eine Begrenzung des Wertebereiches dieses Bewertungskoeffizienten. Der auf diese Weise in seinem Wertebereich begrenzte Bewertungskoeffizient wird von dieser Begrenzeranordnung an die zugehörigen Bewertungsglieder der beiden Teilfilter TF1 und TF2 abgegeben. Durch eine derartige Begrenzung des Wertebereiches ist sichergestellt, daß die Bewertungskoeffizienten auch dann zu einem bestimmten Wert hin konvergieren, wenn der adaptive Entzerrer noch nicht auf die Übertragungskanäle eingestellt ist.

Für die Ermittlung des Bewertungskoeffizienten b2(k + 1) zu einem bestimmten Zeitpunkt k + 1 ist dem Subtrahierer SUB1 eine aus einem Subtrahierer SUB3, einer Begrenzeranordnung B2 und einem Verzögerungsglied T bestehende Schaltungsanordnung nachgeschaltet. Die genannten Schaltungselemente sind in der gleichen Weise miteinander verbunden wie die zuvor genannten, für die Ermittlung des Bewertungskoeffizienten a2(k + 1) dienenden Schaltungsteile. Die Begrenzeranordnung B2 bewirkt hier wiederum eine Begrenzung des Wertebereiches des Bewertungskoeffizienten. Diese Begrenzung kann gegebenenfalls von der Begrenzung des Bewertungskoeffizienten a2(k + 1) abweichen. Der in seinem Wertebereich begrenzte Bewertungskoeffizient b2(k + 1) wird von der Begrenzeranordnung B2 an das zugehörige Bewertungsglied des Teilfilters Tf1 direkt und an das zugehörige Bewertungsglied des Teilfilters TF2 über einen Inverter INV abgegeben.

Vorstehend wurde lediglich die für die Ermittlung des Bewertungskoeffizientenpaares a2, b2 vorgesehene Schaltungsanordnung erläutert. Für die Ermittlung der übrigen Bewertungskoeffizientenpaare sind, wie bereits oben erwähnt, gleiche Schaltungsanordnungen vorgesehen. Unterschiede treten lediglich in der Begrenzung der Wertebereiche der einzelnen Bewertungskoeffizienten auf. Der Bewertungskoeffizient an des die eigentlichen Informationen darstellenden Hauptwerte bewertenden Bewertungskoeffizientenpaares kann, wie bereits oben erwähnt, nur positive Werte annehmen. Hier erfolgt eine Begrenzung der Minimal- und Maximalwerte der möglichen positiven Werte. Für die übrigen Bewertungskoeffizientenpaare erfolgt eine Begrenzung sowohl der positiven als auch der negativen Werte.

In Fig. 3 ist von der in Fig. 2 dargestellten Schaltungsanordnung für die Koeffizientenermittlung KE lediglich ein Ausschnitt wiedergegeben. Dargestellt ist hier der Subtrahierer SUB2 und das mit ihm verbundene Verzögerungsglied T. Anstelle der Begrenzeranordnung B1 sind hier zwei Begrenzeranordnungen B11 und B12 vorgesehen. Diese Begrenzeranordnungen sind über Schalter wahlweise in die mit dem Ausgang des Subtrahierers SUB2 verbundene Leitung einzufügen. Die Schalter sind dabei lediglich schematisch dargestellt. Es können hierfür beliebige steuerbare elektronische Schalter verwendet werden. Für die Steuerung dieser Schalter werden die der Schaltungsanordnung für die Koeffizientenermittlung KE zugeführten Fehlersignale Fa, Fb in einer in Fig.3 mit M bezeichneten Schaltungsanordnung gemittelt. Der sich daraus ergebende gemittelte Fehler wird anschließend in einen Komparator KOM mit einer Fehlerschranke G1 verglichen. Mit dem Ausgangssignal dieses Komparators werden die gerade erwähnten Schalter gesteuert. Je nach Höhe dieses Ausgangssignals ist entweder die eine oder die andere der beiden Begrenzeranordnungen B11 und B12 in die mit dem Ausgang des Subtrahierers SUB2 verbundene Leitung eingefügt.

Mit dem Ausgangssignal des gerade erwähnten Komparators KOM werden auch in den übrigen, für die Ermittlung der einzelnen Bewertungskoeffizienten vorgesehenen Schaltungsanordnungen Schalter gesteuert, die die Anschaltung von den Begrenzeranordnungen B11 und B12 entsprechenden Begrenzeranordnungen bewirken. Durch eine derartige wahlweise Anschaltung von Begrenzeranordnungen ist es möglich, für die Einstellung des adaptiven Entzerreres auf die Übertragungskanäle zunächst den Wertebereich der einzelnen Bewertungskoeffizienten stark zu begrenzen. Durch eine starke Begrenzung der Wertebereiche wird die Einlaufzeit des Entzerrers verkürzt. Allerdings ist durch eine derartige starke Begrenzung eine optimale Entzerrung der empfangenen Signale noch nicht möglich. Nimmt während der Einstellung des Entzerrers dann das in der Schaltungsanordnung M gemittelte Fehlersignal einen Wert an, das unterhalb der vorgegebenen Fehlerschranke G1 liegt, so können die zunächst die starke Begrenzung der Wertebereiche bewirkenden Begrenzeranordnungen durch Begrenzeranordnungen ersetzt werden, die die für eine optimale Einstellung des Entzerrers und damit die für eine optimale Entzerrung der empfangenen Signale erforderliche Begrenzung der Wertebereiche der Bewertungskoeffizienten vornehmen.

Eine weitere Verbesserung des Einlaufverhaltens des Entzerrers wird dadurch erreicht, daß auch der Wert der für die Ermittlung der Bewertungskoeffizienten erforderlichen Entzerrereinstellgröße c in Abhängigkeit von dem Ausgangssignal des Komparators KOM änderbar ist.Liegt das gemittelte Fehlersignal oberhalb der vorgegebenen Fehlerschranke, so wird die Entzerrereinstellgröße c so groß gewählt, daß eine möglichst kurze Einlaufzeit erreicht wird. Bei Unterschreiten der Fehlerschranke durch das Fehlersignal wird dann der Wert der Entzerrereinstellgröße c auf einen für die Entzerrung günstigen Wert verringert.

Vorstehend wurde lediglich die Ermittlung der Bewertungskoeffizienten für das in den Fig. 1 und 2 dargestellte Transversalfilter TF erläutert. Wie bereits oben erwähnt, ist auch für die Ermittlung der Bewertungskoeffizienten des in Fig. 1 dargestellten Rekursivfilters RF eine der Schaltungsanordnung für die Koeffizientenermittlung KE entsprechende Schaltungsanordnung vorgesehen. Auch in dieser Schaltungsanordnung erfolgt die Begrenzung der Wertebereiche der einzelnen Bewertungskoeffizienten in der bereits dargestellten Weise.

Abschließend sei hier noch angemerkt, daß die erfindungsgemäße Begrenzung der Wertebereiche der einzelnen Bewertungskoeffizienten nicht auf quadraturamplitudenmodulierte Signale entzerrende adaptive Entzerrer beschränkt ist. Vielmehr kann diese Begrenzung auch in beliebigen adaptiven Entzerrern, die in einem oder mehreren Übertragungskanälen in Form von amplitudenmodulierten Signalen übertragene Nachrichtensignale entzerren, angewandt werden.

**Patentansprüche**

1. Adaptiver Entzerrer zum Entzerren Von in einem oder mehreren Übertragungskanälen (X, Y) in Form von amplitudenmodulierten Signalen übertragenen Nachrichtensignalen, mit mindestens einer Kette von Verzögerungsgliedern (T), an deren Ausgängen die der jeweiligen Kette zugeführten amplitudenmodulierten Signale jeweils um eine vorgegebene Zeitspanne versetzt auftreten, mit mit den Eingängen bzw. Ausgängen der Verzögerungsglieder verbundenen Bewertungsgliedern, die ihre Ausgangssignale an eine Summierschaltung (S1, S2) abgeben, und mit einer mit dieser Summierschaltung verbundenen Entscheidereinrichtung (ES, KE), welche den Bewertungsgliedern jeweils einen Bewertungskoeffizienten (a1, b1,..., an, bn) zuführen, wobei zumindest ein Teil der Bewertungskoeffizienten durch diesen individuell zugeordnete Begrenzeranordnungen (B1, B2 bzw. B11, B12) in seinem Wertebereich begrenzt ist,
**dadurch gekennzeichnet,**
daß die zu festgelegten Bewertungszeitpunkten auftretenden Bewertungskoeffizienten jeweils von der Entscheidereinrichtung (ES, KE) her nach Maßgabe eines dem gewonnenen Entscheidungsergebnis entsprechenden Fehlersignals (Fa, Fb) in Verbindung mit einer für die Ermittlung der Bewertungskoeffizienten einheitlich festgelegten Entzerrereinstellgröße (c) adaptiv eingestellt sind, daß jeder der zu einem Bewertungszeitpunkt auftretenden Bewertungskoeffizienten dem zugeordneten Bewertungsglied über eine gesonderte, eine für den jeweiligen Bewertungskoeffizienten individuell festgelegte Begrenzung des Wertebereiches bewirkende Begrenzeranordnung (B1, B2 bzw. B11, B12) zugeführt ist und daß die durch die jeweilige Begrenzeranordnung hervorgerufene Begrenzung des Wertebereiches nach Maßgabe eines durch Mittelung der von der Entscheidereinrichtung (ES, KE) nacheinander erzeugten Fehlersignale gewonnenen gemittelten Fehlersignals änderbar ist.

2. Adaptiver Entzerrer nach Anspruch 1,
**dadurch gekennzeichnet,**
daß durch die jeweilige Begrenzeranordnung (B11, B12) ein erster sowie ein gegenüber diesem stärker begrenzter zweiter Wertebereich festgelegt ist
und daß bei Unterschreiten eines festgelegten Schwellwertes (G1) durch das gemittelte Fehlersignal der erste Wertebereich, andernfalls dagegen der zweite Wertebereich für jeden der Bewertungskoeffizienten ausgewählt ist.

3. Adaptiver Entzerrer nach Anspruch 1 oder 2,
**dadurch gekennzeichnet,**
daß nach Maßgabe des von der Entscheidereinrichtung (ES, KE) gewonnenen gemittelten Fehlersignals auch die Entzerrereinstellgröße (c) änderbar ist.

**Claims**

1. Adaptive equalizer for equalizing communication signals transmitted in one or several transmission channels (X, Y) in the form of amplitude-modulated signals, comprising at least one chain of delay sections (T), at the outputs of which the amplitude-modulated signals supplied to the respective chain occur in each case offset by a predetermined period of time, having weighting sections connected to the inputs and outputs, respectively, of the delay sections, which output their output signals to a summing circuit (S1, S2), and a decider device (ES, KE) connected to this summing circuit, which in each case supply the weighting sections with a weighting coefficient (a1, b1, ..., an, bn), at least a part of the weighting coefficients being limited in its value range by limiter arrangements (B1, B2 and B11, B12) individually allocated to these, characterised in that the weighting coefficients occurring at predetermined weighting times are in each case adaptively adjusted from the decider device (ES, KE) as determined by an error signal (Fa, Fb) corresponding to the decision result obtained, in conjunction with an equalizer adjustment quantity (c) uniformly defined for the determination of the weighting coefficients, in that each of the weighting coefficients occurring at a weighting time is supplied to the associated weighting section via a separate limiter arrangement (B1, B2 and B11, B12) effecting a limiting of the value range individually defined for the respective weighting coefficient, and in that the limiting of the value range caused by the respective limiter arrangement can be changed as determined by an averaged error signal obtained by averaging the error signals successively generated by the decider device (ES, KE).

2. Adaptive equalizer according to Claim 1, characterised in that a first value range and a second value range limited more severely compared with the former is determined by the respective limiter arrangement (B11,.B12), and in that when the averaged error signal drops below a defined threshold value (G1), the first value range is selected and, in the other case, the second value range is selected for each of the weighting coefficients.

3. Adaptive equalizer according to Claim 1 or 2, characterised in that the equalizer adjustment quantity (c) can also be changed as determined by the averaged error signal obtained by the decider device (ES, KE).

**Revendications**

1. Égaliseur adaptatif pour corriger les distorsions de signaux d'informations transmis dans un ou plusieurs canaux de transmission (X,Y) sous la forme de signaux modulés en amplitude, et comportant au moins une chaîne de circuits de retardement (T), aux sorties de laquelle les signaux modulés en amplitude envoyés à la chaîne respective apparaissent en étant respectivement décalés d'un intervalle de temps prédéterminé, des circuits de pondération, qui sont raccordés aux entrées ou aux sorties de circuits de retardement et envoient leurs signaux de sortie à un circuit additionneur (S1,S2), et un dispositif de décision (ES,KE), qui est raccordé à ce circuit additionneur et envoie aux circuits de pondération des coefficients respectifs de pondération (a1,a1,...,bn,bn), au moins une partie des coefficients de pondération étant limitée, dans leur gamme de valeurs, par des dispositifs de limitation (B1,B2 ou B11,B12) associés individuellement à ces circuits de pondération, caractérisé par le fait que les coefficients de pondération apparaissant à des instants de pondération fixés sont réglés de façon adaptative respectivement à partir du dispositif de décision (ES,KE), en fonction d'un signal d'erreur (Fa,Fb) correspondant au résultat de décision obtenu, en liaison avec une grandeur (c) de réglage de l'égaliseur, fixée uniformément pour la détermination de coefficients de pondération, que chacun des coefficients de pondération, qui apparaissent à un instant de pondération, est envoyé au circuit de pondération associé par l'intermédiaire d'un dispositif particulier de limitation (B1,B2 ou B11,B12) qui réalise une limitation, fixée individuellement pour le coefficient respectif de pondération, de la gamme de valeurs, et que la limitation de la gamme de valeurs, déclenchée par le dispositif respectif de limitation, peut être modifiée en fonction de la valeur moyenne d'un signal d'erreur, obtenue par formation de la moyenne des signaux d'erreur produits successivement par le dispositif de décision (ES,KE).

2. Égaliseur adaptatif suivant la revendication 1, caractérisé par le fait qu'une première gamme de valeurs et une seconde gamme de valeurs, limitée plus fortement par rapport à la première gamme de valeurs, sont fixées par le dispositif respectif de limitation (B11,B12), et que, dans le cas où la moyenne du signal d'erreur tombe au-dessous d'une valeur de seuil fixée (G1), la première gamme de valeurs est sélectionnée, alors que, sinon, la seconde gamme de valeurs est sélectionnée pour chacun des coefficients de pondération.

3. Égaliseur adaptatif suivant la revendication 1 ou 2, caractérisé par le fait que la grandeur (c) de réglage de l'égaliseur peut être également modifiée en fonction de la moyenne du signal d'erreur fournie par le dispositif de décision (ES,KE).

# FIG 1

# FIG 3

EP 0 143 214 B1

FIG 2

10